# EUROPEAN PATENT SPECIFICATION

(11) **EP 0 739 379 B1**
(45) Date of publication and mention of the grant of the patent: **02.12.1998**
(21) Application number: 95910087.6
(22) Date of filing: 13.01.1995
(51) Int. Cl.: C08L 23/04, C08K 5/15, C08K 5/3477

(54) **GAS FADE RESISTANT ULTRAVIOLET ADDITIVE FORMULATIONS FOR POLYETHYLENE**
VERGILBUNGSBESTÄNDIGE UV-ADDITIVZUSAMMENSETZUNGEN FÜR POLYETHYLEN
COMPOSITIONS D'ADDITIFS POUR POLYETHYLENE RESISTANTES AUX UV ET A LA DECOLORATION PAR DES GAZ

(30) Priority: 14.01.1994 US 182242
(43) Date of publication of application: 30.10.1996
(73) Proprietor: EXXON CHEMICAL PATENTS INC., Baytown, TX 77520-5200 (US)
(72) Inventor: GRAHAM, Blair, Alfred, Ontario N0N 1C0 (CA); SCHMIEG, Joel, Edward, Humble, TX 77396 (US)
(74) Representative: Dew, Melvyn John
(86) International application number: US9500510
(87) International publication number: WO9519391

(56) References cited:
- EP-A- 0 263 524
- EP-A- 0 366 305
- EP-A- 0 542 108
- WO-A-90/07547

## Description

### TECHNICAL FIELD:

This invention relates generally to stabilized polyethylene. More specifically, this invention relates to homopolymers and copolymers of ethylene that are stabilized against ultra-violet degradation, without a substantial tendency to fade or color when exposed to hydrocarbon combustion products.

### BACKGROUND

Since its commercial introduction in the 1940's, polyethylene has come into very broad use. In North America alone, well over 10 billion pounds (4.7 million metric tons) of polyethylene are manufactured annually. Polyethylene has a vast range of commercial applications, from fuel tanks and toys to disposable diaper liners, stretch wrap films and food packaging.

There are several classes of polyethylene. Homopolymers and copolymers are two of the broadest classes. Within copolymers are copolymers of ethylene and another olefin or a diene, as well as copolymers of polar monomers. All polyethylenes have come into wider use in the last three decades, due to many factors, such as more economical production and more versatile usability. Various additives and fillers have extended the use of these versatile polymers even further. Additives such as anti-oxidants which inhibit oxidative breakdown during melt fabrication, and ultra-violet additives to slow the deterioration of articles fabricated from polyethylene when the articles are placed in light containing environments. Color additives are also used for both aesthetic and functional reasons, for example, carbon black is often used to block penetration of light thereby eliminating much of the ability of sunlight to degrade polyethylene. Many other types of functions are performed by additives. Additives are often combined. Some specialized formulations use 10 or more different additives.

In ultra-violet stabilization, it is possible to combine both ultra-violet (UV) absorbers and other types of UV stabilizers in colored and non-colored polyethylene formulations. The result is a comparatively stable article. However, often such a combination of color and other UV degradation retarding additives is not possible or desirable. For instance, in a bag for retail display of apparel, a black or even opaque polyethylene package is of no commercial value. Also for agricultural tanks or other types of tanks, the ability to hold and display the level of a contained product is a distinct advantage.

In standard ultra-violet resistant formulations there are several types of additives, performing several functions. A typical formulation will contain :
a) a primary antioxidant to provide processing stability and long term heat aging resistance, during storage and use;
b) a secondary antioxidant (optional) to provide high temperature process stability;
c) a UV stabilizer and/or UV absorber to prevent or mitigate degradation due to UV exposure; and
d) a neutralizer (optional) for neutralization of catalyst residues.

There are drawbacks to many such additives which may negate, or at least diminish their positive effect. In some cases the additives prevent oxidation, but are not safe for food contact. In an article intended for food containment, this is an unusable combination. In articles intended to be clear or translucent (that is without additives such as carbon black), it has been found that additives intended to make the polyethylene articles useful, can sometimes be rendered ineffective or deleterious. Such diminution of the efficacy of these additives, may occur through materials in the environment that cause an unfavorable reaction with the additives, or the combination of additives may react with themselves or react with constituents in the polyethylene resin itself. Such reactions are caused by many factors, such as heating a polyethylene resin to melt process it into an useful article.

An example of such an effect or reaction, is a phenomenon known as gas fading. In gas fading, certain nitrogen compounds are found to cause unacceptable color generation in polyethylene, usually by reaction of the nitrogen compounds with the polyethylene additives. Several of these nitrogen compounds are found in hydrocarbon combustion products. When such nitrogen compounds contact either a stabilized polyethylene resin or a fabricated article made from that resin, the color that is often generated is unacceptable. The nitrogen compounds are found in exhaust gases from in-plant heaters, fork lifts, trucks at loading docks, and process equipment heaters, to name but a few sources. Understandably, the gas fade problem is aggravated or at its worst in the winter months, with closed buildings and building heaters causing a higher concentration of the nitrogen compounds.

Another example of a deleterious reaction is the color reaction between additives. Hindered amine light stabilizers (HALS) (widely used as a UV stabilizer) and primary antioxidants such as hindered phenolic antioxidants, in the presence of certain nitrogen compounds, can react to form pink or yellow color compounds.

While the problem of gas fading (also known as "pinking") occurs with many polyethylene additive formulations, it has been a particular problem in polyethylene stabilized for UV resistance and weatherability. It is even a greater problem (gas fading) in rotational molding compositions which in the powder form, have a large surface to volume ratio, permitting the reaction to occur more widely.

UV resistance is measured by a test where a fabricated article is subjected to a xenon weatherometer for a specified number of hours, until the samples deteriorate to 50 percent of the value of their original tensile elongation at break. Each UV unit, such as UV-1, indicates that the sample or fabricated article lasted at least 1000 hours until the samples exhibited only 50 percent of the original tensile elongation at break.

In the early 1980's Ultra-violet (UV) stabilization was based on UV absorbers such as benzophenones (Cyasorb^{TM} UV-531 (UV-531) available from Cytec Industries), hydroxylphenols, benzotriazoles (Tinuvin^{TM} 326 (T-326), available from Ciba Giegy) or on UV quenchers such as nickel containing light stabilizers. Such materials alone did not achieve long term (UV-8) protection and usually carried food contact restrictions.

(HALS) like Tinuvin^{TM} 622 (T-622) (available from Ciba Giegy), Chimassorb^{TM} 944 (C-944) (available from Ciba Giegy), or Cyasorb^{TM} UV-3346 (UV-3346) (available from Cytec Industries) use a route different from that of UV absorbers. These HALS provide radical scavenging ability to prevent degradation of the polymer and have a "regenerative" ability to significantly improve UV resistance.

In the mid to late 1980's the HALS stabilizers like T-622 became more widely used in UV stabilized resins, however their use only provided protection characterized as "UV-4 to 5" (equating to 4000 to 5000 hours of weatherometer exposure) when used in UV stabilized resins by themselves. In combination with UV absorbers, for instance T-326, the UV degradation resistance, or extension of weatherometer life, was increased, in some cases even to UV-8. However, with the extended UV life problem solved, this alternative to extended UV weatherability proved poor, because in many plastics with residual trace amounts of catalyst, the catalyst residue reacted with these UV stabilizers to cause a severe and unacceptable yellowing of the resin and/or articles made from the resin. Catalyst residue is most often found in polyethylene products formed in gas phase, solution, or slurry polymerization reactions. This was especially problematic for Linear Low Density Polyethylene resins produced by such reactions. This problem of catalyst residue/stabilizer reaction was partially solved by post reactor processing and or acid neutralization. Such steps add costs. Additionally, this stabilizer combination had unacceptable food contact restrictions.

Those of ordinary skill in the art will appreciate that Irganox^{TM} 1076 or Irganox^{TM} 1010 have been used in polyethylene composition as primary antioxidants. However, in combination with HALS, the result has been varying and unacceptable degrees of gas fade. Other solutions have been attempted, and found unacceptable, as too costly or ineffective.

High molecular weight polymeric HALS like Chimassorb^{TM} 944 or Cyasorb^{TM} UV-3346 improved Tinuvin^{TM} 622 (available from Ciba Giegy Chemical Co.) performance by having more initiating sights for radical scavenging permitting UV-8 performance without need for UV absorbers. These high molecular weight polymeric HALS have permitted a lower cost, better UV resistant formulation, with the added benefit that there were fewer food contact restrictions.

Not overlooked by industry, were oligomeric HALS (such as Tinuvin^{TM} 770 available from Ciba Giegy) which can provide good UV stability, up to UV-8. But because of their lower molecular weight, these HALS are significantly more migratory resulting in either severe food contact limitations, or in some cases, no permitted food contact at all.

Gas fading reactions in polyethylene, discussed above generally take the form of color formation in the polyethylene. The colors are generally pink or yellow, in fact the industry term for the gas fade is "pinking". These colors are now known to develop as a reaction to nitrogen combustion byproducts of hydrocarbons, and can be referred to as NOₓ indicating a nitrogen and oxygen compound. The reaction thought to cause the discoloration is caused by the interactions of the primary phenolic antioxidants with NOₓ vapors. This reaction is thought to be further aggravated by the use of HALS, with primary antioxidants such as Irganox 1076. The mechanism believed to be operative with 1-1076, is oxidation of the 1-1076, then reconfiguration to a quinone, specifically a conjugated bisquinonomethide oxidation product. This reaction is accelerated in the presence of most HALS stabilizers. While Tinuvin^{TM} 622 (also a HALS) does not have a problem with discoloration, it also lacks the ability to achieve UV-8 performance without other additives such as UV absorbers. Such absorbers increase costs and add other problems such as food contact restrictions, and may cause discoloration in any event. However, such a UV stabilizer is necessary, as its polymeric nature enables polyethylene manufacturers to have both UV stability and food law compliance. Such compliance is of definite importance.

There is a need to produce a polyethylene that has a high resistance to ultra-violet light, resists gas fading, is food law compliant , and is relatively economical.

EP 0 366 305 suggests a stabilized polyethylene composition, where the polyethylene has catalyst residues comprising at least 1 transition metal. The composition includes a) polyethylene, b) 100-200 ppm of one or more antioxidants of the phenolic type and c) 100 to less than 2000 ppm zinc oxide, but substantially no calcium stearate.

EP 0 542 108 A2 suggests a polyethylene stabilizing package including a) a tocopherol compound and b) a phosporous or sulphur containing secondary antioxidant in a ration (weight) from 1:1.4 to 1:5.

### SUMMARY

The present invention relates to a polyethylene composition comprising:
(a) a primary antioxidant selected from the group consisting of tris-(3,5-di-tert-butyl-4-hydroxybenzyl), isocyanurate, alpha tocopherols, a 2,5,7,8-tetramethyl-2(4'8'12'-trimethyltridecyl)chroman-6-ol and blends thereof, said primary antioxidant being present in the range of from 50 to 2000 ppm, preferably from 50 to 1000 ppm;
(b) a UV additive selected from the group consisting of polymeric hindered amine light stabilizer, a combination of hindered amine light stabilizer and a benzatriazole and a combination of hindered amine light stabilizer and benzophenone, said UV additive being present in the range of from 500 to 5000 ppm, preferably from 3000 to 5000 ppm;
(c) one or more secondary antioxidants selected from the group consisting of phosphites, diphosphites, and phosphonites, said secondary antioxidants being present in the range of from 0 to 2000 ppm;
(d) an acid neutralizer selected from the group consisting of zinc stearate, calcium stearate, sodium stearate, zinc oxide, sodium oxide and hydrotalcites said acid neutralizer being present in the range of from 0 to 2000 ppm; and
(e) a polyethylene wherein:
the polyethylene is a linear low density polyethylene, having a melt index in the range of from 0.00001 to 0.01 Kg/min. (0.1 to 100 dg/min), a density in the range of from 0.85 to 0.970 g/cc, preferably from 0.915 to 0.970, and a compounding temperature having below the melting point of the isocyanurate, wherein said linear low density polyethylene is an ethylene alpha-olefin copolymer, said alpha-olefin being selected from the group consisting of butene, 4-methyl pentene-1, pentene, hexene, and octene (preferably the polyethylene is made utilizing a catalyst selected from the group consisting of Ziegler-Natta and Metallocene catalysts);
wherein said composition has a UV resistance exceeding 6, preferably at least 7 and a gas fade resistance not exceeding 6 YI-1 units, preferably not exceeding 4 Yl-units.

With the present invention, it has been found that the above-mentioned disadvantages associated with prior solutions to a combination of ultraviolet stability, food law compliance, and gas fade resistance (resistance to color formation due to reaction of nitrogen compounds and stabilizer ingredients) can be minimized or eliminated by the use of Irganox^{TM} 3114 (I-3114 available from Ciba Giegy), which is a hindered phenol (Tris-(3,5-di-tert-butyl-4-hydroxybenzyl) isocyanurate) as a primary antioxidant, in an ultraviolet stabilizer formulation. This primary antioxidant was not believed to be useful in polyethylene stabilizer formulations, because its melting point exceeds commonly used polyethylene compounding temperatures and because of its poor oven aging performance relative to other hindered phenolic antioxidants. This melting point deficiency will be understood by those of ordinary skill in the art to indicate that in subsequent use of a compounded polyethylene, the antioxidant would be unevenly distributed, and the resulting product would not be commercially acceptable.

Additional components of a polyethylene additive formulation are secondary antioxidants such as phosphites, phosphonites, or diphosphites, UV stabilizers such as HALS such as Cyasorb^{TM} UV-3346, Chimassorb^{TM} 944 or other UV stabilizers, UV absorbers, and neutralizers such as zinc, sodium, or calcium stearates, zinc or calcium oxides.

This is a surprising result, in that the 1-3114 has a melt point that exceeds the normal compounding temperature of most polyethylene compositions. This would usually mean that such an additive would not be properly dispersed, diminishing or negating its efficacy. Such diminished efficacy would be noticeable in the end-use formulations utilizing the polyethylene with additives.

The UV resistance and gas fade resistance may be achieved by primary antioxidants such as Irganox^{TM}-3114 or alpha-tocopherol in combination with UV stabilizers such as HALS and (optionally) secondary antioxidants and (optionally) acid neutralizers. The additive formulations will have these beneficial effects on substantially all Ziegler-Natta catalyzed, metallocene catalyzed, or free radical initiated polyethylene resins and films, agricultural films, molded articles, fibers, and many other uses that will be apparent to those of ordinary skill in the art.

The present invention contemplates the combination of:
a) A Ziegler-Natta catalyzed, metallocene catalyzed, or free radical initiated polyethylene resin;
b) a primary antioxidant;
c) A secondary antioxidant; (optional)
d) A UV stabilizer; and
e) a neutralizer (optional).

Such combination will show a UV life meeting or exceeding UV-8, and a gas fade resistance, after 44 hours of testing, of less than 2 YI-1 units. In an embodiment of the present invention, a polyethylene composition comprising Irganox^{TM}-3114, polymeric HALS, and a polyethylene is contemplated.

In a preferred embodiment of the present invention, the polyethylene is a linear low density, or high density polyethylene, having a melt index in the range of from 0.05 to 0.03 Kg/min (0.05 to 300 dg/min.), a density in the range of from 0.85 to 0.970 g/cc, where the linear low density polyethylene is an ethylene alpha-olefin copolymer, the alpha-olefin having in the range of from 1 to 20 carbon atoms.

### Description of the Preferred Embodiments

The present invention concerns certain polyethylene compositions, and applications based on these compositions. These polyethylene compositions have unique properties which make them particularly well suited for use in applications that require ultraviolet light resistance and freedom from gas fading. These compositions have combinations of properties that render them superior to compositions previously available for many uses such as films, rotational or injection molded articles, and fibers .

Following is a detailed description of certain preferred polyethylene compositions, preferred methods of producing these compositions and preferred applications of these compositions. For example, though the properties of the composition are exemplified in rotational molding applications, they have numerous other uses.
Various values given in the text and claims are determined as follows:

**Gas Fading:** American Association of Textile Chemists and Colorists (AATCC) Test Method 23-1972 Atmospheric Fume Chamber Drum Type, Model No. 8727.

**Molded Part Color After Gas Fade: YI-1** calculated Value from ASTM-1925-70 (Reapproved 1988), run on Hunterlab Model D-25-9 Colorimeter.

**Melting Point of Additive and Melting point of Polyethylene:** Peak melt point determined via Differential Scanning Calorimeter ASTM-3417-75.

**Rotational Molding Cure Time (min.):** Exxon Method, using a Clamshell rotational molding machine, model FSP M-60. Time necessary for a rotational molding formulation, usually in granular or ground powder form, to fuse into a homogeneous part at a given temperature. Too little cure time will result in voids or air pockets, too much cure time will degrade the resin. A sheet steel mold was used for this test.

**Rotational Molding impact:** Low Temperature Impact Test. A dart impact test from "Association of Rotational Molders, Chicago, Illinois" tests run at - 40 degrees Centigrade.

**Compounding Temperature:** Temperature used in a mixing device, typically a pelletizing extruder to:
a) change physical form of the polyethylene from either solid granules or molten polymer to more easily handled pellets;
b) get good additive dispersion by maintaining a minimum compounding temperature; the minimum temperature is desirable to forestall thermodegradation of the polyethylene.

Such temperatures will vary with the melting or softening point of the polymer and with, among other parameters, the molecular weight of the polymer. For example, for linear low density polyethylene with a density of 0.915-0.925 g/cc the ideal compounding temperature is in the 180-210° C range.

For an ethylene vinyl acetate copolymer with a melt index of from 1 to 0.001 Kg/min. (1 to 10 dg/min.), and a 20% vinyl acetate content, the compounding temperature range would be considerably lower.

The polyethylene composition of the present invention for use as a rotational molding or injection molding material has the following properties: excellent ultraviolet resistance at least UV-6, preferably at least 7, more preferably at least 8. The polyethylene composition also has excellent resistance to gas fading indicated by YI-1 color measurement of less than 6 YI-1 units, preferably less than 4 Yl units, more preferably less than 2 YI-1 units, and most preferably less than 1 YI-1 unit. The excellent UV resistance and excellent gas fade resistance improves the ability of articles made from these polyethylene compositions to be incorporated into articles that will need a long useful life in an environment that includes sunlight and nitrogen compounds, the latter being from among other sources, hydrocarbon combustion products.

### The Polyethylene Resin

The polyethylene composition of the present invention for use as rotational or injection molded articles may be made from a ethylene copolymer or an ethylene homopolymer or a blend of an ethylene copolymer with other ethylene homopolymers.

The polyethylene composition may be made from a homopolymer or a copolymer of ethylene. This ethylene polymer has a density in the range of from 0.85 to about 0.970 g/cc, a melt index (as measured according to ASTM D-1238) in the range of from 0.000005 to 0.03 Kg/min. (0.05 to 300 dg/min) Preferably from 0.00001 to 0.01 Kg/min. (0.1 to 100 dg/min) and more preferably in the range of from 0.0001 to 0.008 Kg/min. (1 to 80 dg/min). If the ethylene copolymer is an ethylene α-olefin copolymer, the α-olefin utilized to make the ethylene polymer is selected from an α-olefin having from 1-20 carbon atoms.

The ethylene polymer may be made by a number of processes, including high pressure, gas phase, fluidized bed, slurry or solution processes. Where free radical polymerization is not used, the catalysts used for the polymerization are generally of the Ziegler-Natta or metallocene types. Such catalysts are well known and their products are well known.

Where the polyethylene is formed in free radical polymerization, it can be either homopolymer or copolymer. When the polyethylene is a free radical polymerized ethylene copolymer, the comonomer included may be selected from a broad range of ethylenically unsaturated esters and acids.

As noted above, it is important that the compounding temperature be less than the melting point of the primary antioxidant.

### The Primary Antioxidant

The primary antioxidant may be chosen from a hindered phenol (Tris-(3,5-di-tert-butyl-4-hydroxybenzyl) isocyanurate), or alpha-tocopherols and mixtures of hindered phenols and alpha-tocopherols. The hindered phenol is available from Ciba Giegy Corp. as Irganox^{TM} 3114. The alpha-tocopherols are available from. Roche Vitamins and Fine Chemicals, under the trade names RONTEC® 201, 202C [2,5,7,8-tetramethyl-2(4'8'12'-trimethyltridecyl)chroman-6-ol)].

The primary antioxidant will usually be present in the formulation in the range of 50 ppm to 2000 ppm, preferably in the range of from 50 to 1000 ppm, more preferably in the range of from 50 to 500 ppm. Contrary to what is believed by those in the industry, this primary antioxidant can be utilized in the present types of formulations, even though it has a higher melting point than that of the polyethylene polymer. The primary antioxidants melt temperature is above the temperature normally used for melt mixing the polymer. As for example the melting point of Irganox^{TM} 3114 is 218-223 degrees Centigrade, while the compounding temperature of most polyethylenes ranges from 190 to 210 degrees Centigrade in commercial practice.

### The Secondary Antioxidant

The secondary antioxidant can be chosen from Irgafos^{TM} 168 (Tris(2,4-di-tert-butylphenyl) phosphite (available from Ciba Giegy)), Sandostab PEPQ^{TM} (Tetrakis (2,4-di-t-butylphenyl)4,4'-biphenylene diphosphonite (available from Sandoz Chemical Co.), UTRANOX^{TM} 626 (Bis(2,4-di-tert-butylphenyl)Pentaerythritol Diphosphite available from General Electric), and Weston^{TM} 399 (trisnonylphenyl phosphite available from General Electric).

The secondary antioxidant will usually be present in the formulation in the range of 0 ppm to 2000 ppm, preferably from 0 ppm to 1000 ppm.

### The Ultra-Violet Stabilizer

The UV stabilizer and or absorber may be chosen from Cyasorb^{TM} UV-3346 (Poly[(6-morpholino-s-triazine-2,4-diyl)(2,2,6,6-tetramethyl-4-piperidyl)imino]-hexamethylene[2,2,6,6-tetramethyl-4-piperidyl)imino] available from Cytec Industries), UV-531 (2-hydroxyl-4-n-octoxybenzophenone available from Cytec Industries), Chimasorb^{TM} 944 (available from Ciba Giegy), Uvasil^{TM} 299 (available from Enichem.), Tinuvin^{TM} 783 (a mixture of Chimasorb^{TM} 944 and Tinuvin^{TM} 622 available from Ciba Giegy), Tinuvin^{TM} 785 (available from Ciba Giegy), Tinuvin^{TM} 326 (2-(3'-tert-butyl-2'hydroxy-5'-methylphenyl)-5-chlorobenzotriazole available from Ciba Giegy), Tinuvin^{TM} 770 (bis(2,2,6,6-tetramethyl-4-piperidyl)sebacate available from Ciba Giegy), Tinuvin^{TM} 622LD (Dimethyl succinate polymer with 4-hydroxy-2,2,6,6-tetramethyl-1-piperidene-ethanol available from Ciba Giegy), and Tinuvin^{TM} 765 (Bis (1,2,26,6-pentamethyl-4-piperidinyl) sebacate available from Ciba Giegy)), UVASORB^{TM} HA-88 (available from 3V Corp.), and UV-CHECK^{TM} Am-806 (available from Enichem). Any of these additives may be used alone or in combination with one or more of the others.

The UV stabilizer and/or absorbers will usually be present in the formulation in the range of 500 ppm to 5000 ppm, preferably from 500 ppm to 3000 ppm.

### The Neutralizer

The neutralizer may be chosen from Zinc, Calcium, or Sodium stearates, Zinc or Calcium oxides, and Hydrotalcites like DHT-4A (Mg₆Al₂(OH₁₆CO_{3•} 4H₂O available from Kyowa Chemical Industry Co., Ltd.).

The neutralizer will usually be present in the formulation in the range of 0 ppm to 2000 ppm, preferably from 0 to 1000 ppm, more preferably from 0 to 500 ppm.

Using these formulations a combination of UV resistance, meeting or exceeding UV-8 and a gas fade resistance of less than or equal to 1 YI-1 color units is attainable.

By permitting UV resistance to be relatively high, while maintaining gas fade resistance with formulations of the present invention, a resin or an article made from such resin will be attainable at lower cost than previously achievable.

### Example I

Irganox^{TM} 3114 UV stabilizer was used as a primary stabilizer in a polyethylene composition. The Irganox^{TM}-3114 was blended with a phosphite (I-168) at a level of 710 ppm, UV-3346 (3007 ppm), polyethylene reactor granules LL-8401 (an ethylene hexene copolymer from Esso Chemical Canada, 0.939 density, 3.0 Ml), and Zinc stearate at a level of 380 ppm in a ribbon blender at room temperature for 15 minutes. The blend and reactor granules were then compounded in an Anger twin screw pelletizing extruder at a temperature of 205 degrees Centigrade.

Following pelletizing, the pellets are subsequently ground to a 35 mesh (500 µm)powder. The powder was placed in a sheet steel mold, heat applied until cure, or melting was complete. The part was removed and tested. Results are shown in Table II.

### Comparative Examples 2 and 3

Similar procedures as used in example 1 were used to prepare examples 2 and 3. In example 2 the primary antioxidant used was Irganox 1076,. In example 3 the primary antioxidant used was Irganox 1010. The levels of all additives are shown in Table I The results of all formulations are shown in Table II.

**TABLE I**

| **Additive Levels In Examples 1, 2, and 3 Concentrations in ppm** | | | |
|---|---|---|---|
| Additive | Example 1 | Comparative Example 2 | Comparative Example 3 |
| I-3114 | 300 | | |
| I-1076 | | 494 | |
| I-1010 | | | 285 |
| I-168 | 710 | 727 | 697 |
| Zinc stearate | 380 | 391 | 394 |
| UV-3346 | 3007 | 2988 | 3186 |

**TABLE II**

| | | | |
|---|---|---|---|
| Primary Antioxidant | I-3114 | I-1076 | I-1010 |
| Melting Point of Additive degrees°C | 218-223 | 50-55 | 110-125 |
| Compounding Temperature degrees°C | 205 | 205 | 205 |
| Rotational Molding Cure Time, Min. | 18 | 18 | 18 |
| Rotational Molding Impact, Joules at -40 degrees°C | 163 | 163 | 149 |
| Gas Fade Color AATCC Test, YI-1₍₁₎ | | | |
| 0 hours | 0.2 | -0.8 | 3.0 |
| 9 hours | 0.2 | 0.1 | 5.0 |
| 44 hours | 0.2 | 6.5 | 14 |

| | | | |
|---|---|---|---|
| ₍₁₎ compression molded plaque, thickness, 6.1 mm | | | |

From these examples, it can be seen that the formulation containing I-3114 has a substantial resistance to color gas fading when compared to formulations containing either I-1076 or I-1010.

## Claims

1. A polyethylene composition comprising:
(a) a primary antioxidant selected from the group consisting of tris-(3,5-di-tert-butyl-4-hydroxybenzyl), isocyanurate, alpha tocopherols, a 2,5,7,8-tetramethyl-2(4'8'12'-trimethyltridecyl)chroman-6-ol and blends thereof, said primary antioxidant being present in the range of from 50 to 2000 ppm;
(b) a UV additive selected from the group consisting of polymeric hindered amine light stabilizer, a combination of hindered amine light stabilizer and a benzatriazole and a combination of hindered amine light stabilizer and benzophenone, said UV additive being present in the range of from 500 to 5000 ppm;
(c) one or more secondary antioxidants selected from the group consisting of phosphites, diphosphites, and phosphonites, said secondary antioxidants being present in the range of from 0 to 2000 ppm;
(d) an acid neutralizer selected from the group consisting of zinc stearate, calcium stearate, sodium stearate, zinc oxide, sodium oxide and hydrotalcites said acid neutralizer being present in the range of from 0 to 2000 ppm; and
(e) a polyethylene wherein:
the polyethylene is a linear low density polyethylene, having a melt index in the range of from 0.00001 to 0.01 Kg/min. (0.1 to 100 dg/min), a density in the range of from 0.85 to 0.970 g/cc, and having a compounding temperature below the melting point of the isocyanurate, wherein said linear low density polyethylene is an ethylene alpha-olefin copolymer, said alpha-olefin being selected from the group consisting of butene, 4-methyl pentene-1, pentene, hexene, and octene;
wherein said composition has a UV resistance exceeding 6 and a gas fade resistance not exceeding 6 YI-1 units.

2. The polyethylene composition of claim 1 wherein said primary antioxidant is present in the range of from 50 to 1000 ppm;
Wherein said polyethylene has a density in the range of from 0.915 to 0.970 g/cc, wherein said polyethylene is made utilizing a catalyst selected from the group consisting of Ziegler-Natta and Metallocene catalysts;
wherein said UV additive is present in the range of from 500 to 3000 ppm;
Wherein said composition has a UV resistance of at least 7 and a gas fade resistance not exceeding 4 YI-1 units.

3. The polyethylene composition of claim 1 or 2 wherein said UV additive is present in the range of from 50 to 500 ppm, and said composition has a UV resistance of at least 8, and a gas fade resistance not exceeding 2, preferably not exceeding 1 YI-1 units

4. Use of the composition of claim 1, 2 or 3 to form a rotational molded article.

5. Use of the composition of claim 1, 2 or 3 to form a injection molded article.

6. Use of the composition of claim 1, 2 or 3 to form a film article.

7. Use of the composition of claim 1, 2 or 3 to form a fiber article.

8. Use of the composition of claim 1, 2 or 3 to form an agricultural film article.

9. Use of the composition of claim 1, 2 or 3 to form a sheet article.

## Patentansprüche

1. Polyethylenzusammensetzung, die
(a) ein primäres Antioxidans ausgewählt aus der Gruppe bestehend aus Tris(3,5-di-tert.-butyl-4-hydroxybenzyl)-isocyanurat, α-Tocopherolen, einem 2,5,7,8-Tetramethyl-2-(4'8'12'-trimethyltridecyl)chroman-6-ol und Gemischen derselben, wobei das primäre Antioxidans im Bereich von 50 bis 2 000 ppm vorhanden ist;
(b) ein UV-Additiv ausgewählt aus der Gruppe bestehend aus polymerem gehinderten Amin-Lichtstabilisator, einer Kombination aus gehindertem Amin-Lichtstabilisator und einem Benzotriazol und einer Kombination aus gehindertem Amin-Lichtstabilisator und Benzophenon, wobei das UV-Additiv im Bereich von 500 bis 5 000 ppm vorhanden ist;
(c) ein oder mehrere sekundäre Antioxidantien ausgewählt aus der Gruppe bestehend aus Phosphiten, Diphosphiten und Phosphoniten, wobei die sekundären Antioxidantien im Bereich von 0 bis 2 000 ppm vorhanden sind;
(d) ein Säureneutralisierungsmittel ausgewählt aus der Gruppe bestehend aus Zinkstearat, Calciumstearat, Natriumstearat, Zinkoxid, Natriumoxid und Hydrotalkiten, wobei das Säureneutralisierungsmittel im Bereich von 0 bis 2 000 ppm vorhanden ist, und
(e) ein Polyethylen umfaßt,
wobei das Polyethylen ein lineares Polyethylen mit niedriger Dichte mit einem Schmelzindex im Bereich von 0,00001 bis 0,01 Kg/Min (0,1 bis 100 dg/Min), einer Dichte im Bereich von 0,85 bis 0,970 g/cm³ und einer Kompoundiertemperatur unter dem Schmelzpunkt des Isocyanurats ist, wobei das lineare Polyethylen mit niedriger Dichte ein Ethylen/α-Olefin-Copolymer ist, wobei das α-Olefin ausgewählt ist aus der Gruppe bestehend aus Buten, 4-Methylpenten-1, Penten, Hexen und Octen, wobei die Zusammensetzung eine UV-Beständigkeit, die 6 überschreitet, und eine Gasechtheit aufweist, die 6 YI-1-Einheiten nicht überschreitet.

2. Polyethylenzusammensetzung nach Anspruch 1, bei der das primäre Antioxidans im Bereich von 50 bis 1000 ppm vorhanden ist, das Polyethylen eine Dichte im Bereich von 0,915 bis 0,970 g/cm³ hat, wobei das Polyethylen unter Verwendung eines Katalysators ausgewählt aus der Gruppe bestehend aus Ziegler-Natta- und Metallocen-Katalysatoren hergestellt ist, wobei das UV-Additiv im Bereich von 5 000 bis 3 000 ppm vorhanden ist, wobei die Zusammensetzung eine UV-Beständigkeit von mindestens 7 und eine Gasechtheit aufweist, die 4 YI-1-Einheiten nicht überschreitet.

3. Polyethylenzusammensetzung nach Anspruch 1 oder 2, bei der das UV-Additiv im Bereich von 50 bis 500 ppm vorhanden ist und die Zusammensetzung eine UV-Beständigkeit von mindestens 8 und eine Gasechtheit aufweist, die 2 nicht überschreitet und vorzugsweise 1 YI-1-Einheiten nicht überschreitet.

4. Verwendung der Zusammensetzung nach Anspruch 1, 2 oder 3 zur Herstellung eines durch Rotationsgießen hergestellten Gegenstands.

5. Verwendung der Zusammensetzung nach Anspruch 1, 2 oder 3 zur Herstellung eines durch Spritzgießen hergestellten Gegenstands.

6. Verwendung der Zusammensetzung nach Anspruch 1, 2 oder 3 zur Herstellung eines Feinfoliengegenstands.

7. Verwendung der Zusammensetzung nach Anspruch 1, 2 oder 3 zur Herstellung eines Fasergegenstands.

8. Verwendung der Zusammensetzung nach Anspruch 1, 2 oder 3 zur Herstellung eines Landwirtschaftsfeinfoliengegenstands.

9. Verwendung der Zusammensetzung nach Anspruch 1, 2 oder 3 zur Herstellung eines Foliengegenstands.

## Revendications

1. Composition de polyéthylène, comprenant :
(a) un antioxydant primaire choisi dans le groupe consistant en isocyanurate de tris-(3,5-di-tertio-butyl-4-hydroxybenzyle), alpha-tocophérols, un 2,5,7,8-tétraméthyl-2-(4',8',12'-triméthyltridécyl)chromane-6-ol et leurs mélanges, ledit antioxydant primaire étant présent en une quantité comprise dans l'intervalle de 50 à 2000 ppm ;
(b) un additif UV choisi dans le groupe consistant en un photostabilisant du type amine polymérique à encombrement stérique, une association d'un photostabilisant du type amine à encombrement stérique et d'un benzotriazole et une association d'un photostabilisant du type amine à encombrement stérique et de benzophénone, ledit additif UV étant présent en une quantité comprise dans l'intervalle de 500 à 5000 ppm ;
(c) un ou plusieurs antioxydants secondaires choisis dans le groupe consistant en phosphites, diphosphites et phosphonites, lesdits antioxydants secondaires étant présents en une quantité comprise dans l'intervalle de 0 à 2000 ppm ;
(d) un neutralisant d'acide choisi dans le groupe consistant en le stéarate de zinc, le stéarate de calcium, le stéarate de sodium, l'oxyde de zinc, l'oxyde de sodium et des hydrotalcites, ledit neutralisant d'acide étant présent en une quantité comprise dans l'intervalle de 0 à 2000 ppm ; et
(e) un polyéthylène, dans laquelle :
le polyéthylène est un polyéthylène linéaire basse densité, ayant un indice de fluidité compris dans l'intervalle de 0,00001 à 0,01 kg/min (0,1 à 100 g/min), une masse volumique comprise dans l'intervalle de 0,85 à 0,970 g/cm³, et une température de mélange inférieure au point de fusion de l'isocyanurate, ledit polyéthylène linéaire basse densité étant un copolymère éthylène-alpha-oléfine, ladite alpha-oléfine étant choisie dans le groupe consistant en butène, 4-méthylpentène-1, pentène, hexène et octène ;
ladite composition ayant une résistance au rayonnement UV dépassant 6 et une résistance à l'altération par un gaz n'excédant pas 6 unités YI-1.

2. Composition de polyéthylène suivant la revendication 1, dans laquelle l'antioxydant primaire est présent en une quantité comprise dans l'intervalle de 50 à 1000 ppm ;
le polyéthylène a une masse volumique comprise dans l'intervalle de 0,915 à 0,970 g/cm³, ledit polyéthylène étant préparé en utilisant un catalyseur choisi dans le groupe consistant en catalyseurs de Ziegler-Natta et catalyseurs à base de métallocène ;
ledit additif UV est présent en une quantité comprise dans l'intervalle de 5000 à 3000 ppm ;
ladite composition ayant une résistance au rayonnement UV d'au moins 7 et une résistance à l'altération par un gaz n'excédant pas 4 unités YI-1.

3. Composition de polyéthylène suivant la revendication 1 ou 2, dans laquelle l'additif UV est présent en une quantité comprise dans l'intervalle de 50 à 500 ppm, ladite composition présentant une résistance au rayonnement UV d'au moins 8, et une résistance à l'altération par un gaz n'excédant pas 2, de préférence n'excédant pas 1 unité YI-1.

4. Utilisation de la composition suivant la revendication 1, 2 ou 3, pour former un article moulé par moulage rotatif.

5. Utilisation de la composition suivant la revendication 1, 2 ou 3, pour former un article moulé par injection.

6. Utilisation de la composition suivant la revendication 1, 2 ou 3, pour former un article sous forme de film.

7. Utilisation de la composition suivant la revendication 1, 2 ou 3, pour former un article sous forme de fibres.

8. Utilisation de la composition suivant la revendication 1, 2 ou 3, pour former un article sous forme d'un film à usage agricole.

9. Utilisation de la composition suivant la revendication 1, 2 ou 3, pour former un article sous forme de feuille.
